# EUROPEAN PATENT APPLICATION

(11) **EP 1 640 920 A1**
(43) Date of publication of application: **29.03.2006**
(21) Application number: 03817143.5
(22) Date of filing: 25.09.2003
(51) Int. Cl.: G06T 15/70

(54) **PROCESS ANIMATION AUTOMATIC GENERATION METHOD AND SYSTEM**

(30) Priority: 03.06.2003 JP 2003158537
(71) Applicant: Lattice Technology, Inc., Tokyo 102-0074 (JP); Toyota Jidosha Kabushiki Kaisha, Toyota-shi, Aichi 471-8561 (JP)
(72) Inventor: NAKAYAMA, Shintaro, LATTICE TECHNOLOGY, INC., Chiyoda-ku, Tokyo 102-0074 (JP); YAJIMA, Makoto, LATTICE TECHNOLOGY, INC., Chiyoda-ku, Tokyo 102-0074 (JP); HARADA, Tsuyoshi, LATTICE TECHNOLOGY, INC., Chiyoda-ku, Tokyo 102-0074 (JP)
(74) Representative: Dunleavy, Kevin James
(86) International application number: PCT/JP2003/012222
(87) International publication number: WO 2004/109602

(57) **Abstract**

The purpose of the present invention is to provide a method and a system for enabling the automatic generation of disassembly animations and fast and inexpensive preparation of animations for an industrial product consisting of a plurality of parts, based on three-dimensional CAD or XVL data of the product.

In order to attain this objective, according to a principal aspect of the present invention, there is provided a method for automatically generating a process animation having the steps of: (a) obtaining three-dimensional data of a product consisting of a plurality of parts; (b) generating disassembly definition information for disassembling the product into parts thereof according to a user entry; (c) generating a disassembly algorithm for the parts of the product according to the disassembly definition information, and storing the disassembly algorithm in a memory; and (d) generating a disassembly animation of the parts of the product according to the disassembly algorithm.

## Description

### FIELD OF THE INVENTION

This invention relates to a method and system for automatically generating disassembly animations of, for example, an industrial product consisting of a plurality of parts based on three-dimensional CAD data or XVL data of the product.

### BACKGROUND OF THE INVENTION

In the manufacturing industry, disassembly/assembly procedures for product assemblies or repairs need to be indicated to the operators in an easy-to-understand manner. In general, such disassembly/assembly procedures have been indicated using three-dimensional illustrations showing the positional relationship and assembly directions for the parts.

Such work procedures should most preferably be displayed visually using three-dimensional animations. However, it requires prodigious time and cost to create animations in general.

Considering the above situation, the purpose of the present invention is to provide a method and system for enabling an automatic generation of the disassembly animations and fast and inexpensive preparation of animations for the product based on three-dimensional CAD or XVL data of, for example, an industrial product consisting of a plurality of parts.

### SUMMARY OF THE INVENTION

In order to attain the above object, according to a principal aspect of the present invention, there is provided a method for automatically generating a process animation, comprising the steps of:(a) obtaining three-dimensional data of a product consisting of a plurality of parts; (b) generating disassembly definition information for disassembling the product into parts thereof according to a user entry; (c) generating a disassembly algorithm of the product into parts thereof according to the disassembly definition information, and storing the disassembly algorithm in a memory; and (d) generating a disassembly animation of the parts of the product according the disassembly algorithm.

According to one embodiment, the disassembly definition information is the definition information of dependency relationships among parts and group relationships among groups, and comprises a tree structure consisting of nodes and leaves, which are processes and parts, respectively, wherein each of the nodes comprises a basic process and an intermediate process performed in the basic process, and wherein each of the leaves consists of a process parts group for grouping a plurality of parts or parts groups, and the parts or parts groups.

In addition, step (c) generates the disassembly algorithm by adding to the disassembly definition information, a moving coordinate system of the basic process and the intermediate process, and a moving position of the parts or parts groups and the process parts group along the moving coordinate system, that are determined based on the disassembly definition information. In this case, in step (c), as for the moving coordinate system, the coordinate system of a part or parts group that forms the base of the basic process is selected as the coordinate system of the basic process or the intermediate process. In addition, in step (c), a shape of each of the parts or parts groups is approximated with a circumscribing polygon thereof, and the moving position is set such that each polygon is at a minimum distance from each other which is greater than a predetermined ratio.

According to another embodiment, step (d) generates a movement animation for parts or parts groups in each process for each of the basic process and the intermediate process based on the following parameters: an animation length, an interpolation system for between a start and end point, and a disassembly coefficient for determining a disassembly moving distance. In this case, step (d) further generates an animation for each of the basic process or the intermediate process by adding camera view point information.

Moreover according to yet another embodiment, there is provided the step of (e) modifying the disassembly algorithm and the disassembly animation after the animation or an entire animation is generated. In this case, step (e) modifies the movement animation of each process by modifying a position, a bearing or a scale of each of the parts or parts groups for each animation created for each of the basic process, the intermediate process and the processes connecting the basic and intermediate processes, wherein the basic, intermediate and connecting processes constitute the disassembly definition information. Also step (e) generates and presents a user interface for modifying the position, bearing or scale for each of the parts or parts groups.

According to still another embodiment, when step (e) modifies one animation, step (e) also modifies animations of other processes, that are performed within the process corresponding to the one animation, by modifying a position, a bearing or a scale of each of the parts or parts groups in each of those other processes based on the disassembly algorithm. Also step (e) further permits modification of camera view point information for each animation to modify each animation.

According to yet another embodiment, step (e) modifies each movement animation in each process by determining an interference among the parts or parts groups during movements thereof for each animation created for each of the basic processes, intermediate processes, and the processes that connect the basic and intermediate processes, wherein the basic, intermediate and connecting processes constitute the disassembly definition information; and modifying the position, bearing or scale for each of the parts or parts groups in each animation. In this case, the interference among the parts or parts groups during the movements thereof is determined by calculating the interference among respective polygons circumscribed around each of the parts or parts groups.

Other characteristics and marked effects of the present invention will become apparent to those skilled in the art upon referring to explanations of the following specification when taken in conjunction with the accompanying drawings.

### BRIEF DESCRIPTION OF THE DRAWINGS

FIG. 1 is an outline block diagram of a system according to one embodiment of the present invention;
FIGS. 2A and 2B are diagrams showing the concept of disassembly definition information generation;
FIGS. 3A-3C are diagrams showing one example of disassembly definition information generation;
FIGS. 4A-4D are diagrams showing one example of disassembly definition information generation;
FIGS. 5A-5E are diagrams showing one example of disassembly definition information generation;
FIGS. 6A-6C are diagrams showing one example of disassembly definition information generation;
FIGS. 7A and 7B are diagrams showing one example of disassembly definition information generation;
FIG. 8 is a process diagram showing the generations of a disassembly algorithm and an animation;
FIG. 9 is a schematic diagram describing the disassembly algorithm;
FIG. 10 is a diagram showing three-dimensional graphic data of an electric saw as one example;
FIG. 11 is a panel showing a parts assembly structure;
FIG. 12 is a diagram describing the concept of a parts assembly ordering;
FIG. 13 is a diagram showing the creation of a process structure (disassembly definition information) using a process editing panel;
FIG. 14 is a diagram showing the creation of a process structure (disassembly definition information) using a process editing panel;
FIG. 15 is a diagram showing the creation of a process structure (disassembly definition information) using process properties;
FIG. 16 is a diagram showing the creation of a process structure (disassembly definition information) using a process editing panel;
FIG. 17 is a diagram showing the creation of a process structure (disassembly definition information) using a process editing panel;
FIG. 18 is a diagram showing the creation of a process structure (disassembly definition information) using a process editing panel;
FIG. 19 is a diagram showing the creation of a process structure (disassembly definition information) using a process editing panel;
FIG. 20 is a diagram showing the creation of the process structure (disassembly definition information) using the process editing panel;
FIGS. 21 A and B are diagrams showing the creation of a process structure (disassembly definition information) using a process editing panel;

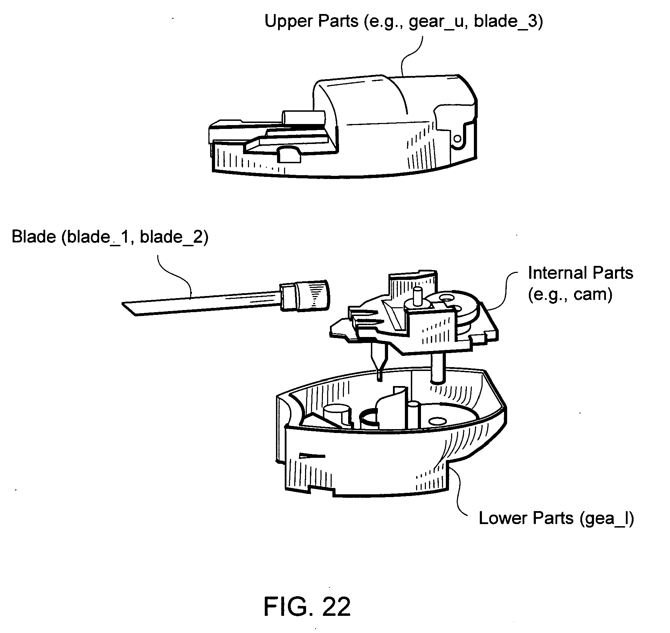

FIG. 22 is a diagram showing the concept of a disassembly process design of moving parts;
FIG 23 is a diagram showing the creation of a process structure (disassembly definition information) using a process editing panel;
FIG. 24 is a diagram showing the creation of a process structure (disassembly definition information) using a process editing panel;
FIG. 25 is a diagram showing a parameter entry system for creating a process animation;
FIG. 26 is a diagram showing a system for setting a view point;
FIG. 27 is an example of a screen display describing a process modification process;
FIGS. 28A and 28B are diagrams showing a parts interference state;
FIG. 29 is a diagram showing one example of an animation editing system;
FIG. 30 is a diagram showing one example of an animation editing system using an animation panel;
FIG. 31 is a diagram showing one example of an animation editing system using a keyframe property panel;
FIG. 32 is a diagram showing one example of an animation editing system;
FIG. 33 is a diagram showing one example of a view point editing system;
FIG. 34 is a diagram showing one example of the view point editing system; and
FIG. 35 is a diagram showing one example of the view point editing system.

### DETAILED DESCRIPTION OF THE PREFERRED EMBODIMENTS

One embodiment of the present invention will be described below in accordance with accompanying drawings.

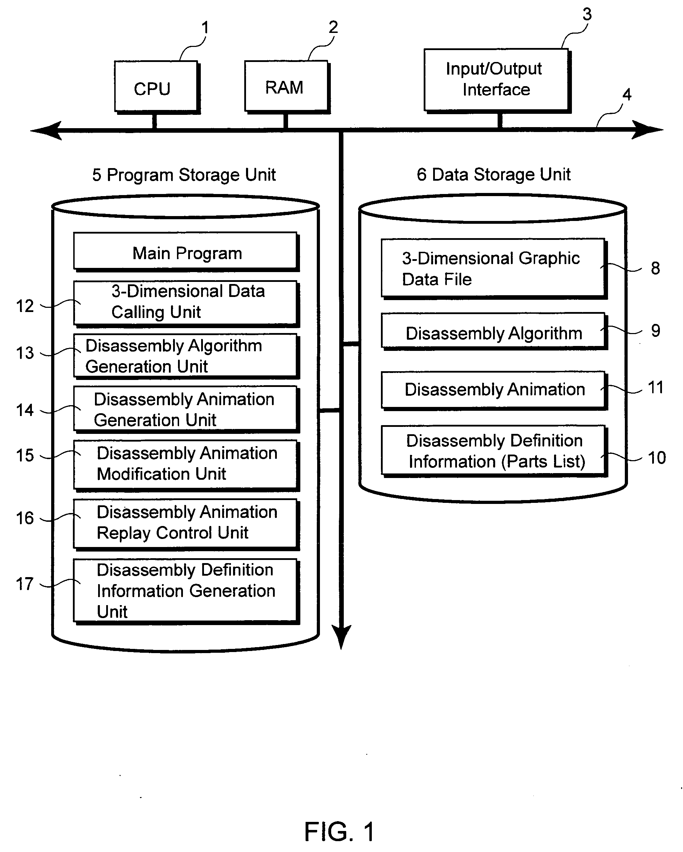

FIG. 1 is a schematic structural view showing a system according to this one embodiment. Connected with a CPU 1, a RAM (memory) 2, and an input and output interface 3 and the like and connected to a bus 4, and a program storage unit 5 and data storage unit 6 are also connected.

Stored in the data storage unit 6 is a three-dimensional graphic data file 8 in XVL format for providing three-dimensional data used as materials for creating a disassembly/assembly animation. Additionally stored in this data storage unit 6 are disassembly definition information 11 (process definition information) that is outputted, a disassembly algorithm 9, and a disassembly animation 10.

Meanwhile, components stored in the program storage unit 5 and relevant to the present invention are: a three-dimensional data calling unit 12 for obtaining and storing in the memory the three-dimensional graphic data file 8 from the data storage unit 6; a disassembly definition information generation unit 17 for generating and storing in the memory the disassembly definition information 11 for disassembling a product into parts based on user entries; a disassembly algorithm generation unit 13 for generating and storing in the memory the disassembly algorithm 9 of the product into parts according to the disassembly definition information 11; a disassembly animation generation unit 14 for generating and outputting the disassembly animation 10 of the product parts according to the disassembly algorithm 9; a disassembly animation modification unit 15 for modifying the disassembly algorithm 9 and instructing the disassembly animation generation unit 14 to re-generate the disassembly animation 10 after the animation is generated; and a disassembly animation replay control unit 16 for controlling to replay the disassembly animation.

Here, information received from the user in the disassembly definition information generation unit 17 is definition information of dependency relationships among parts and group relationships among groups. Also, the disassembly definition generated in this disassembly definition information generation unit 17 comprises a tree structure consisting of "nodes" and "leaves", which are processes and parts, respectively, as discussed in more detail below. In addition, each of these nodes comprises a "basic process" and an "intermediate process" performed in the basic process, and each of the leaves consists of a "process parts group" for grouping a plurality of parts or parts groups, and each of the parts or parts groups.

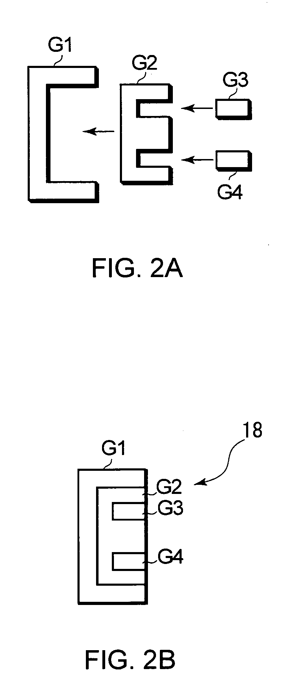

A concept of this disassembly definition information generation will be described below in accordance with FIG. 2 and later.

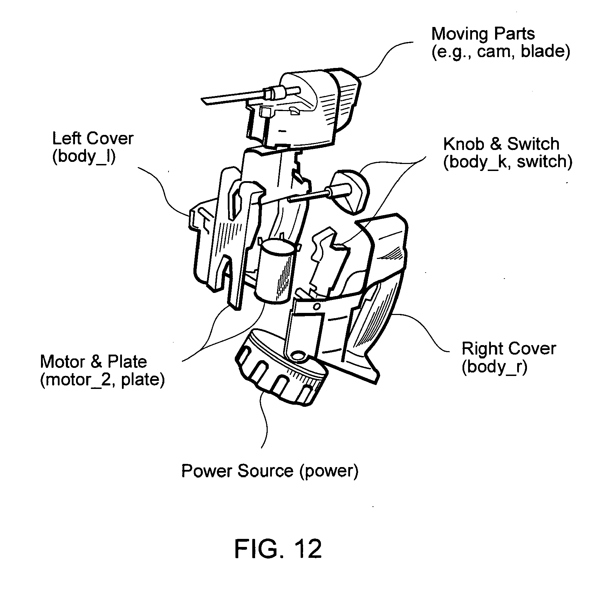

For simplicity, an example will be described wherein parts G1~G4 (in this embodiment referred to as a "group"), as shown in FIG. 2A, will be assembled to manufacture a finished product 18 shown in FIG. 2B. An assembly process design for these parts G1-G4 is performed through a predetermined interface (a design screen as shown in FIG. 12 and later) as described below.

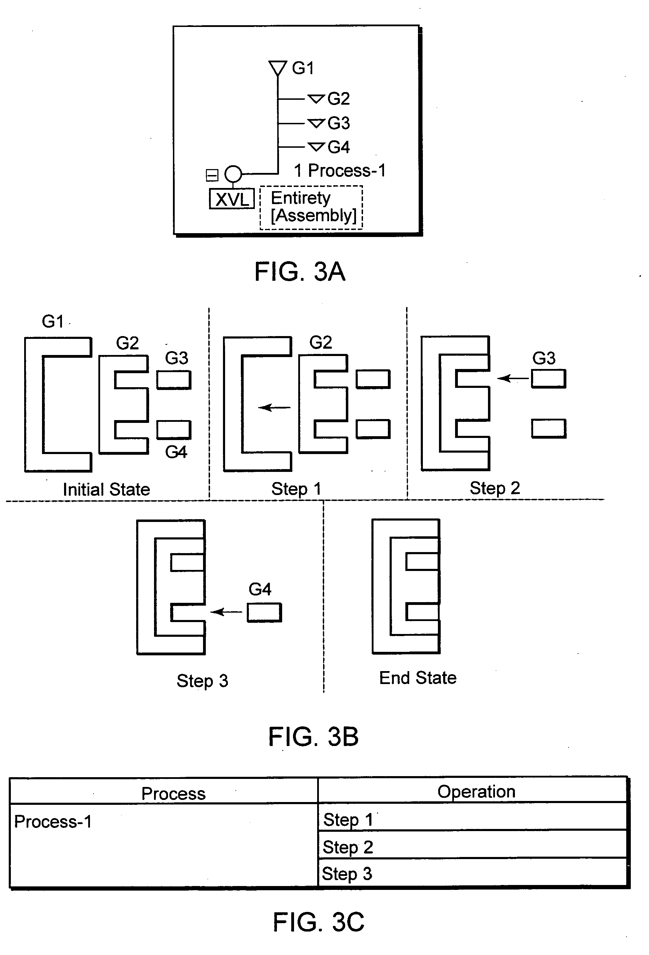

FIGS. 3-7 shows different assembly orders, respectively; and indicate how to define and design the assembly process in each case.

FIG. 3 is an example in which the parts G2-G4 are sequentially assembled to the part G1 in the order of G2-G4. In this case, the assembly process is shown as in FIG. 3A. In this FIG., an icon "○" represents a basic process. Also a group (G1) registered at the top of this basic process is indicated with an icon "∇ + vertical line under" to indicate a group (base group) as a basis of assembly (disassembly) of other components. This base group does not move in an animation.

Each of groups to be assembled/disassembled (G2-G4) other than the base group is indicated with an icon "―+ ∇". In the present example, a disassembly process consists of the basic process (Process-1) and the groups and does not include the intermediate process. That is, G1 is a base and G2-G4 are assembled groups.

By creating a process animation from the above process structure during a process animation creation described below, an animation moving as in FIG. 3B is generated. In this case, all of the groups G1-G4 are displayed from the beginning and assembled sequentially.

In this case, a respective relationship between each operation step and each process is shown in FIG. 3C.

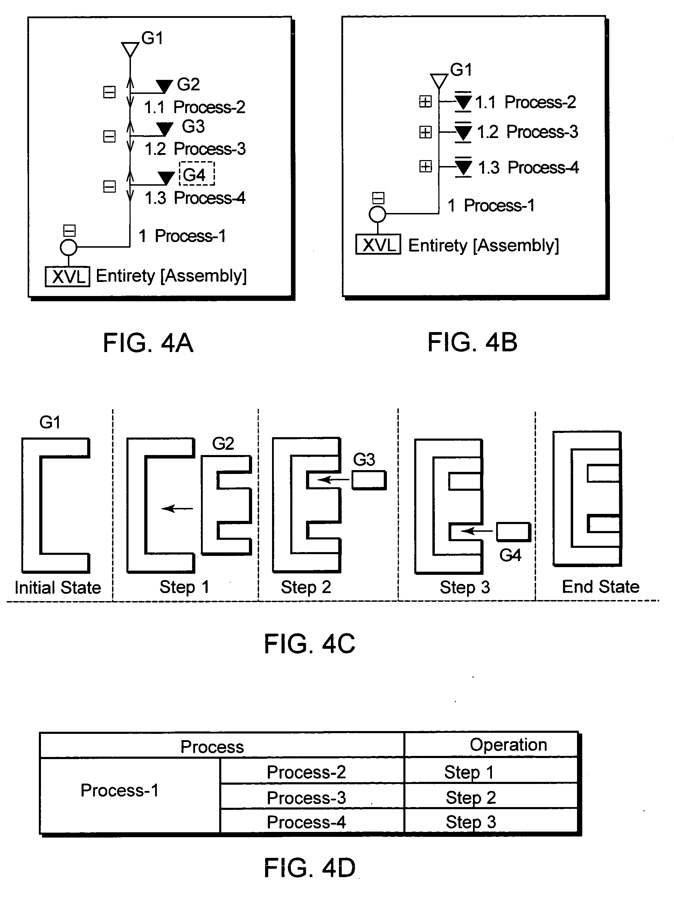

FIGS. 4A-4D show an example with intermediate processes as well as a basic process. Intermediate processes are used to further divide a basic process into a plurality of processes for, as an example, groups to be assembled or dissembled within the basic processgroup. Each group belonging to an intermediate process is indicated with "▼" as shown in FIG. 4A. As shown in FIG. 4B, each intermediate process is indicated with "▼ + upper and under lines" when it is closed. Differences between a case with these intermediate processes and a case with only the basic process will be described below:

By using these intermediate processes, an assembly and/or a disassembly of a plurality of components may be grouped to set process information such as comments, man-hours and custom properties. Also a display timing can be differentiated in the process animation. When replaying an animation of this assembly process, said disassembly animation replay control unit 16 displays elements of the intermediate processes not initially, but after the animation of the intermediate processes are redisplayed. In a disassembly process, however, it displays elements from an initial state but hides them when finished with replaying the intermediate processes.

FIGS. 4A and 4B show an example of process structuring using the intermediate processes. In FIG. 4A, the intermediate processes are open so that process components can be viewed. In this state, in order to indicate intermediate process components, "↕" is displayed. In FIG. 4B, each intermediate process is closed as described above and displayed with "▼ + upper and under lines".

In the present example, the basic process Process-1 is divided into 3 intermediate processes, Process-2, Process-3 and Process-4. The difference between the animations of this example and the one in FIG. 36 is that in this example, each of the groups (parts) G2-G4 does not appear until the stage in which it is assembled as shown in FIG. 4C.

In the current example, a respective relationship between each process and each operation step is shown in FIG. 4D.

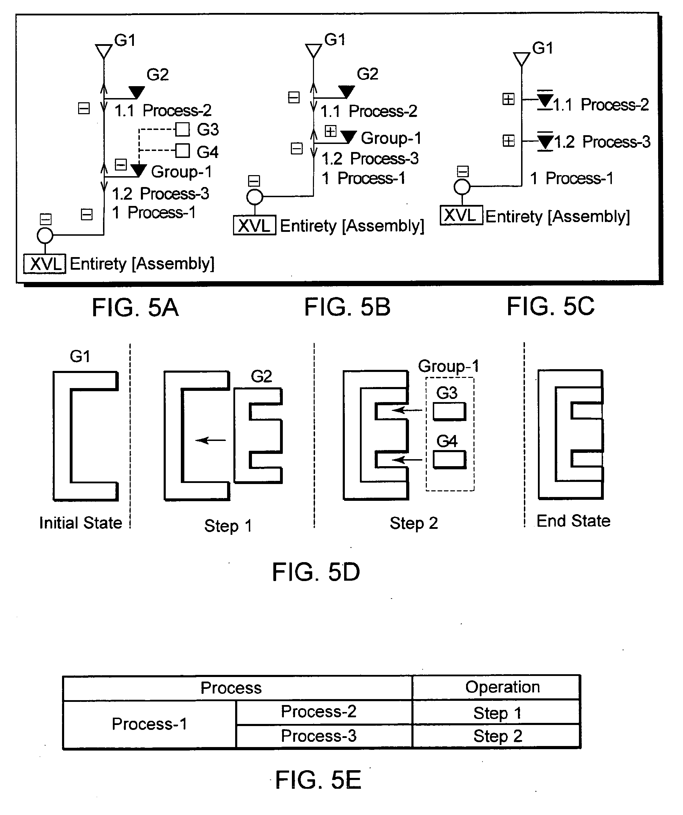

The significance of the process parts group will be described below in reference to FIG. 5.

FIGS. 5A-5C show an example in which a process is structured using process parts groups so that G3 and G4 are simultaneously assembled. Although the 3 process drawings all represent the same process, process parts group components are closed to be undisplayed in FIG. 5B, and each intermediate process is closed in FIG. 5C.

A process parts group is one assembly (disassembly) unit which groups a plurality of groups and is indicated using "▼", as shown in FIG. 5B, as an alternative to a group. Each group included in the process parts group is indicated with "□" as shown in FIG. 5A. By using the process parts group, an animation in which a plurality of groups simultaneously move may be created with the process animation creation described below.

For this case, an animation as in FIG. 5D is created during the process animation creation. A respective relationship between each process and each operation step is shown in FIG. 5E.

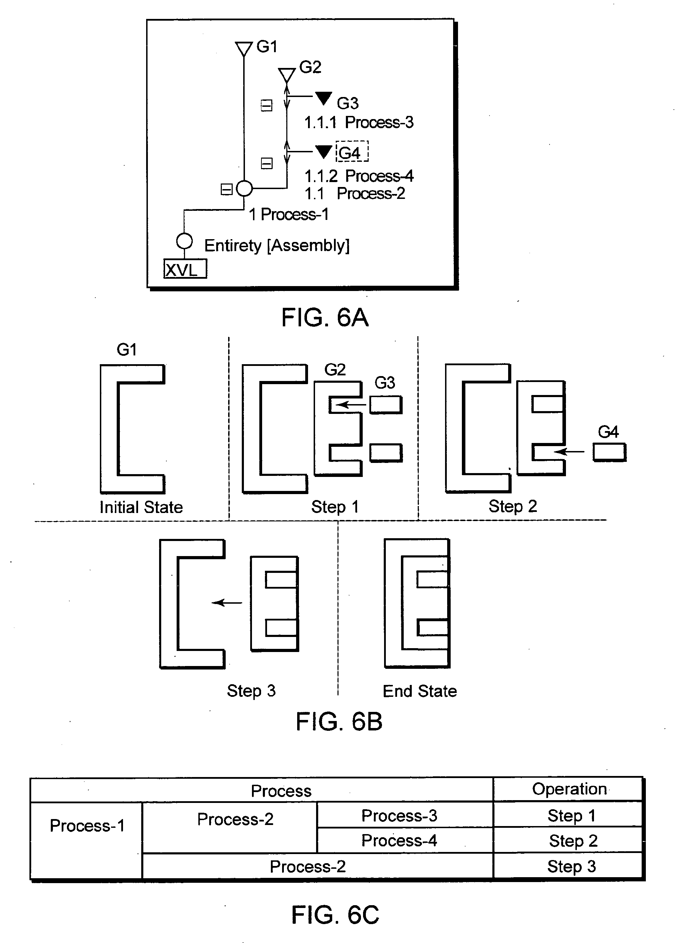

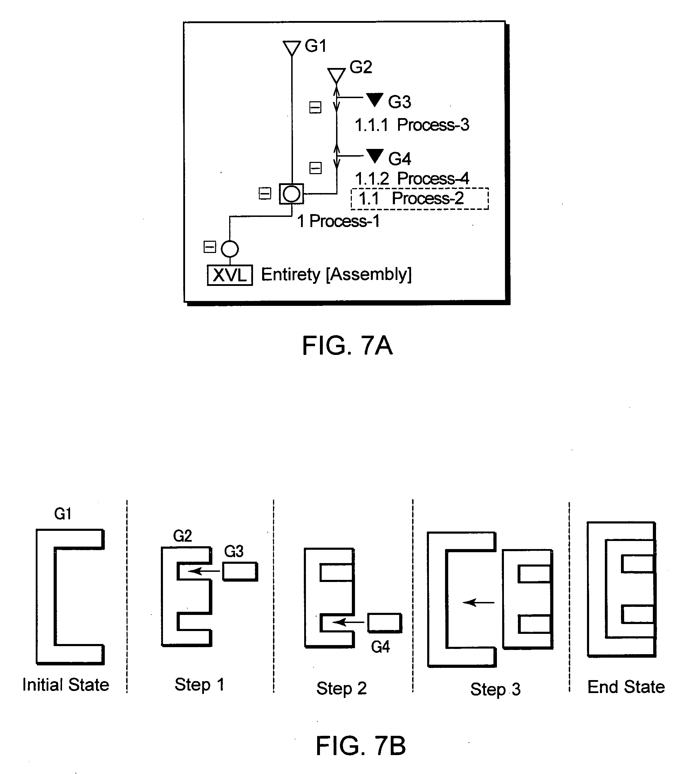

FIGS. 6 and 7 show an example which allows assembling (disassembling) of an assembly (disassembly) animation with a plurality of parts for each of the parts by creating a structure that includes basic processes as components of another basic process (nesting of basic processes).

This is used to represent assembly (disassembly) procedures when, for example, assembling small parts and then fitting the assembled small parts into a larger part. Additionally the larger part may be set to be not displayed when an animation for the small part assembly is being replayed. FIGS. 6 and 7 will be used below to describe cases with and without the larger part displayed, respectively.

FIG. 6A is an example in which the processes are structured using the nested basic processes so that G2, G3 and G4 are assembled into a medium part and then assembled into a large part G1. In this animation, the large part (G1) is displayed even during the assembly of the small parts (G2, G3 and G4).

In this case, an animation as in FIG. 6B is created during the process animation creation. A respective relationship between each process and each operation step is shown in FIG. 6C.

FIG. 7A shows an example in which G1 is set to be not displayed during the assembly of G2, G3 and G4. When compared with FIG. 6A, the G2-based process "Process-2" is indicated with an icon in which O is superimposed on □. In this case, the large part (G1) is not displayed during the assembly of the small parts (G2, G3 and G4) in the process animation. A respective relationship between each process and each operation step is the same as the previous case (FIG. 6C).

As described above, when the user specifies parts (group), basic processes, intermediate processes and process parts groups through a prepared interface, the disassembly definition information generation unit 17 generates the disassembly definition information 11 accordingly and stores the information in the data storage unit 6.

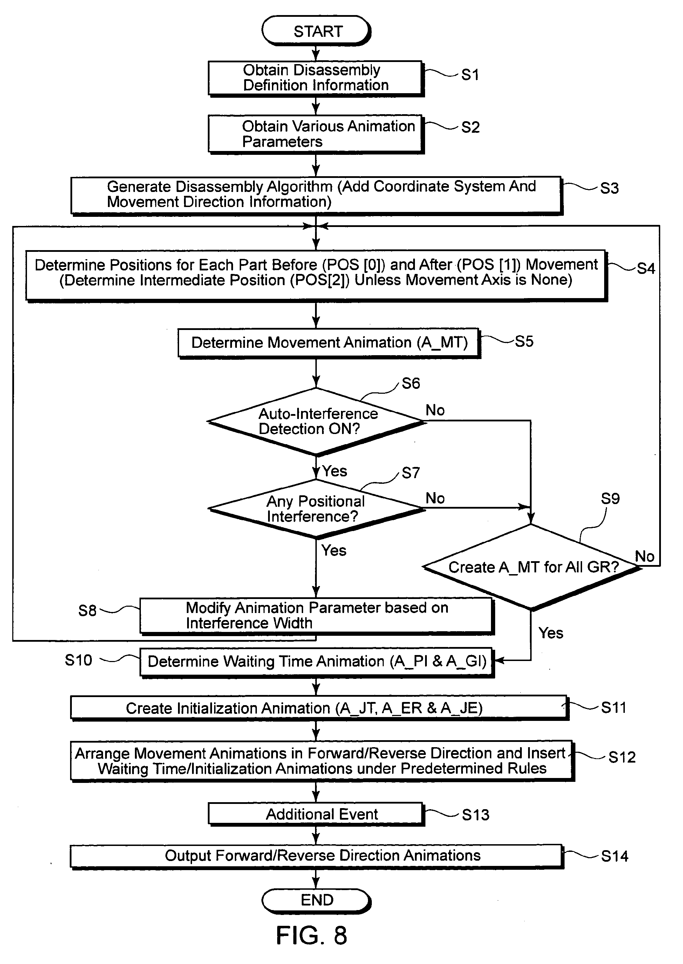

Next, functions and operations of the disassembly algorithm generation unit 13 and the disassembly animation generation unit 14 will be described below in reference to a flowchart in FIG. 8. Steps S1-S14 described herein correspond to S 1-S 14 in the figure, respectively.

The disassembly algorithm generation unit 13 and the disassembly animation generation unit 14 obtain the disassembly definition information 11 (step S1); and based on this disassembly definition information 11, generate a disassembly algorithm for parts or parts groups in each process and generate the disassembly animation according to the disassembly algorithm for each of the basic processes, intermediate processes and connecting processes connecting the basic and intermediate processes according to various parameters: (1) an animation length (moving and waiting times), (2) an interpolation system in-between the start and end points, and (3) a disassembly coefficient for determining a disassembly moving distance (step S2-S12).

For convenience in the following description and accompanying drawings, symbols are used as below.

Namely, the following are used for input data:
(1) 3-Dimensional graphic data file (XVL file: shown as 8 in FIG. 1)
(2) Disassembly definition information (shown as 11 in FIG. 1)
   PP: Upper-level process
   BP: Basic process
   MP: Intermediate process
   GP: Process parts group
   GR: Parts (group)
(3) Animation generation parameters (stored in the disassembly definition information 11)
   mt_length: Movement animation time length
   mi_length: Waiting time between movement animations
   pi_length: Waiting time between processes
   intpl (None, X, Y, Z): Animation interpolation system
   decomp: Disassembly coefficient
   reuse: Reuse

Meanwhile, the following are used for output data:
(1) Movement animation (shown as 10 in FIG. 1)
   A_MT (Movement Animation): Movement animation for parts
(2) Initialization animation (shown as 10 in FIG. 1)
   A_JT (Jump Top Animation): Forward replay, process start
   A_ER (End Return Animation): Forward replay, process return
   A_JE (Jump End Animation): Reverse replay, process start
   A_TR (Top Return Animation): Reverse replay, process return
(3) Waiting time animation (shown as 10 in FIG. 1)
   A_GI (Group Interval Animation): Between movement animations
   A_PI (Process Interval Animation): Between processes
(4) Events (stored in the animation 10)

The events are used for controlling the animation and serve two functions: connecting animations, and receiving user entries.
UE_Play: Forward replay
UE_Reverse: Reverse replay
UE_Pause: Pause
UE_Next: Jump to the beginning of the next process
UE_Prev: Jump to the beginning of the previous process
UE_First: Jump to the initial process
UE_Last: Jump to the last process
UE_Process_nnn: Jump to a process nnn
UE_Original: Jump to before the start of the process animation
UE_Final: Jump to after the end of the process animation

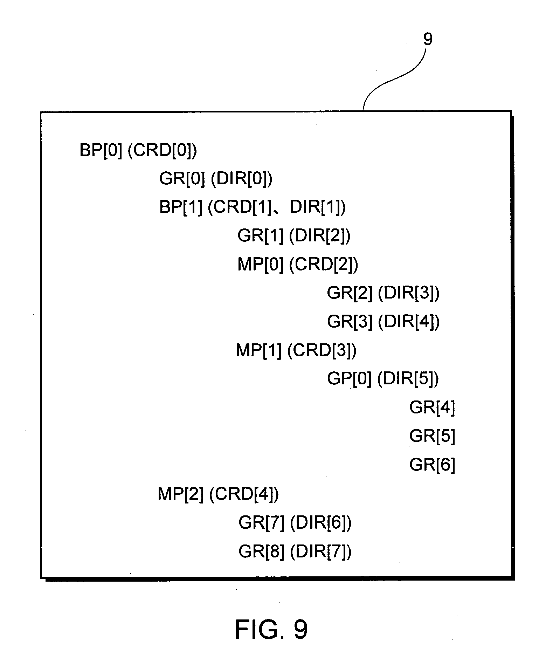

First, the disassembly algorithm generation unit 13 creates a structure (algorithm 9) in the memory, as shown in FIG. 9 (step S3), based on the disassembly definition information 11. In other words, the disassembly algorithm generation unit 13 adds information of a coordinate system (CRD) and a movement direction (DIR) therealong, both of which become a disassembly basis of each of the parts and process parts groups, based on a basic/intermediate process structure defined in the disassembly definition information 11.

Only BP and MP have CRD. CRD is a coordinate system for the basic process base group. In the present example:
CRD [0] is the coordinate system of GR[0];
CRD [1] is the coordinate system ofGR[1];
CRD [2] is the same as CRD [1];
CRD [3] is the same as CRD [1]; and
CRD [4] is the same as CRD [0].

On the other hand, BP; GP and GR comprise DIR. This DIR is used tois obtained by approximatinge each shape under a process with a Bounding Box (a cube circumscribed around each shape: BB) and determininge a disassembly direction and a position so that the BBs of a fitted part and a receiving part are apart by more than a specified fraction (disassembly parameter intpl) and the BB centers are apart by a minimum distance.

Thus the structure shown in FIG. 9 (disassembly algorithm 9) is generated.

The structure created in the above example is hereinafter referred to as PT (Process Tree). Functions and operations of the disassembly animation generation unit 14 will be described below.

The disassembly animation generation unit 14 first generates the movement animation A_MT for each of the parts. It then creates A_MT's for elements comprising DIR in PT from top to down.

Note that if the parameter reuse is ON, and if an animation of the corresponding element is present within the input, that animation becomes A_MT.

If no animation is present, POS [0] and POS [1] are generated from CRD and DIR (step S4):
POS [0] = Current position of the element
POS [1] = POS [0] + DIR within CRD

For an assembly animation, animation from POS [1] to POS [0] is created as A_MT (step S5). The animation time length ofA_MT becomes the parameter mt_length.

Note that if an axis other than NONE is specified for the parameter intpl in the steps S4 and S5, a position projected onto a plane orthogonal to a vector VEC = POS [0] - POS [1] as an axis is calculated. For example, POS [2] is generated as follows:

POS [2] = a point POS [0] is projected onto a plane which contains an axis's normal line and the position POS [1]

POS [2] = a point where POS [0] projects onto a plane passing through position POS [1] and having the axis as a normal vectorline.

In this case, an animation playing POS [1] → POS [2] → POS [0] is A_MT.

Next, whether or not an automatic interference detection is ON is determined (step S6), and if it is ON, the disassembly animation modification unit 15 modifies the animation with the following system; i.e., the disassembly animation modification unit 15 comprises a function to determine whether or not the parts or parts groups interfere with each other during their movements. This function determines a shape which approximates a cube which surrounds each of the moving parts or parts groups based on the 3-dimensional graphic data, and determines the interference among the moving parts or parts groups according to the interference between each of the above shape (step S7). Then it sets the parameters of the above (1)-(3) so that the above interference does not occur (step S8). Specifically in this embodiment, an initial part position is shifted using a calculated interference width, and if there is a restriction for a shift position, the parts are rotated based on the interference width. However, the present invention is not limited by this system. After the parameters are modified, step S4 and later are repeated and a modified A_MT is generated.

The above process is repeated until all A_MT's are created in PT (step S9). For example, from the PT in FIG. 9, the followingA_MT's are generated. When generating an animation for BP and GP, its movement elements are all of its lower-level GRs.

| Animation | Corresponding element | Movement element |
|---|---|---|
| A_MT[0] | GR[0] GR[0] | |
| A_MT[1] | BP[1] GR[1], GR[2], GR[3], GR[4], GR[5] and GR[6] | |
| A_MT[2] | GR[1] GR[1] | |
| A_MT[3] | GR[2] GR[2] | |
| A_MT[4] | GR[3] GR[3] | |
| A_MT[5] | GP[0] GR[4], GR[5] and GR[6] | |
| A_MT[6] | GR[7] GR[7] | |
| A_MT[7] | GR[8] GR[8] | |

Next, the waiting time animations A_PI and A_MI are generated from the parameters mi-length and pi_length (step S 10).

The initialization animations are generated from the A_MTs (step S11). Then each A_MT is sequenced in the order it is executed:
A_MT [0]→ A_MT [2] → A_MT [3] → A_MT [4] → A_MT [5] → A_MT [1] → A_MT [6] → A_MT [7]

The initialization animations are generated and inserted along the arranged A_MT animation sequence. Simultaneously, A_PI and A_MI are also inserted. Animations are generated under the following rules (step S12).
- Initialization animations (A_JT, A_ER, A_TR and A_JE) are generated while sequentially applying individual elements of the animation sequence. Whenever arriving at an appropriate point corresponding to the start/end of each process in the animation sequence, a state at the point is taken as a snapshot and used to generate an initialization animation.
- For the processes (BP [0], BP [1], MP [0], MP [1] and MP [2]),
   - A_JT is generated at the beginning of the forward direction.
   - A_ER is generated at the end of the forward direction.
   - A_TR is generated at the beginning of the reverse direction.
   - A_JE is generated at the end of the reverse direction.
- For in between the movement animations, if, after inserting A_JT, A_ER, A_TR or A_JE, a point in the resulting animation sequence has A_MT adjacent to another A_MT, an A_MI is inserted to make the sequence A_MT A_MI A_MT.
- A_PI is inserted immediately after A_JT and A_JE. A_PI is inserted immediately before A_T and A_ER.
- Two animation sequences; i.e., a forward direction animation sequence and a reverse direction animation sequence are generated. An example of a forward direction animation sequence is shown below:
   A_JT [0] → A_PI → A_MT [0] → A_JT [1] →A PI → A_MT [2] → A_JT [2] → A_PI → A_MT [3] → A_MI → A_MT [4] →A_PI →A_ER [0] → A_JT [3] → A_PI → A_MT [5] → A_PI → A_ER [1] → A_ER [2] → A_PI → A_MT [1] → A_JT [4] → A_PI → A_MT [6] → A_MI → A_MT [7] → A_PI

Here, the movement animation and the initialization animation are generated by adding information of a camera view point. In the present embodiment, this camera view point is set using a view point of when the animation is generated. However, this camera view point can be specified for each process animation and each animation of a process connecting processes as described below.

Then the disassembly animation generation unit 14 generates events connecting animations (step S 13). Events are generated for each animation of the forward direction animation sequence and the reverse direction animation sequence.

An event EV [i] is executed on the completion of AN [i], when AN [i] is set as an i-th element of the animation sequence. EV [i] performs the following process:

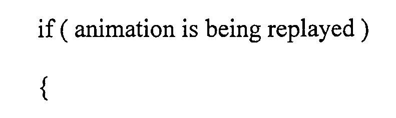

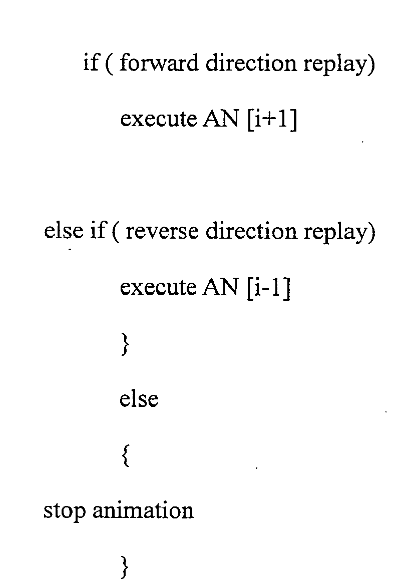

The disassembly animation generated as above is output to and stored in the data storage unit 6 (step S 14).

The generated animation may be replayed for verification by starting the disassembly animation replay control unit 16. If there are any problems with the replayed animation, the user may start the disassembly animation modification unit 15 to modify a section in question in the animation.

Specifically, the user modifies the movement animation in each process by modifying (1) a position, (2) a bearing or (3) a scale of each of the parts or parts groups for each animation constituting the basic process, the intermediate process and the connecting processes connecting the basic and intermediate processes.

The user also may start the disassembly animation modification unit 15 to determine the interference among the parts or parts groups. As described above, this function determines a shape which approximates a cube which surrounds each of the moving parts or parts groups based on the 3-dimensional graphic data, and determines the interference among the moving parts or parts groups according to the interference among each of the above shapes.

This embodiment further provides a function to modify the camera view point information to thereby modify the animation for each basic process or intermediate process.

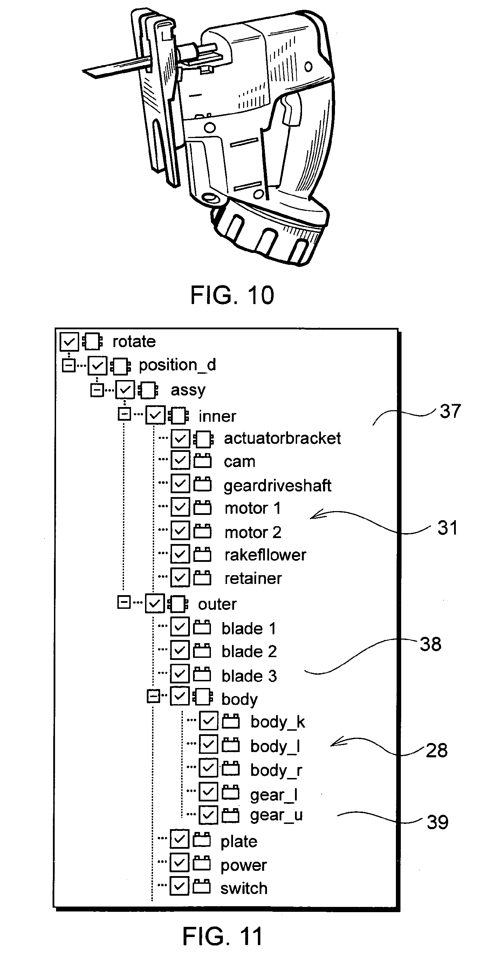

Generation of the disassembly algorithm, and generation and modification of the animation will be described below using an example of an electric saw assembly process shown in FIG. 10. The 3-dimensional graphic data for this electric saw is stored in the data storage unit 6 in an XVL file named "nokogiri.xv3".

Stored in this XVL file is a group structure of each part constituting the saw, and when displayed, they look like the one shown in FIG. 11. In this embodiment, this screen in FIG. 11 is called a "group editing panel" and designed to allow editing of the group structure of the parts with various menu commands (not shown).

Based on this XVL file, the disassembly definition information is generated.

In order to generate this disassembly definition information, it should be first considered how the electric saw is disassembled or assembled. The structure of this electric saw is shown in FIG. 12. As a simple assembly procedure, the following is considered in which parts are assembled to a left cover and a right cover closes:
1. Moving parts are assembled to the left cover.
2. A motor, a knob, a switch, a power source and the like are assembled onto.
3. The right cover is assembled to close the entirety.
4. A plate is assembled to finish the product.

However, the moving parts consist of a plurality of parts and these parts should be assembled before assembling the entire saw. Therefore, in this procedure the moving parts are assembled together before the assembly of the above 1.

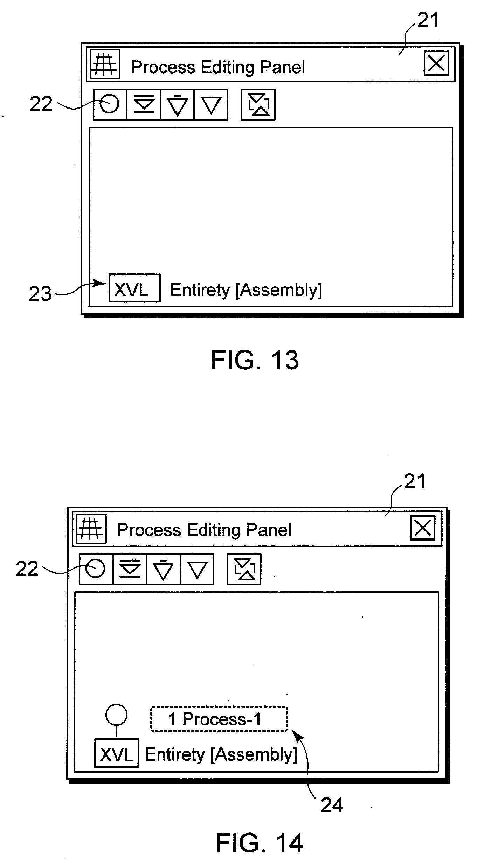

The disassembly definition information is generated using a process editing panel 21 as shown in FIG. 13 and later. In this embodiment, by creating processes in the process editing panel 21 the disassembly definition information generation unit 17 structures those processes as the disassembly definition information 11 and stores them in the data storage unit 6, as described above.

First, as shown in FIG. 13, a O button 22 at the top and "Entirety [Assembly]" 23 at the bottom of the process editing panel 21 are clicked in this order. Next, the "Entirety [Assembly]" 23 is right-clicked to add a basic process. Thus a process 24 called "Process-1" is generated as shown in FIG. 14.

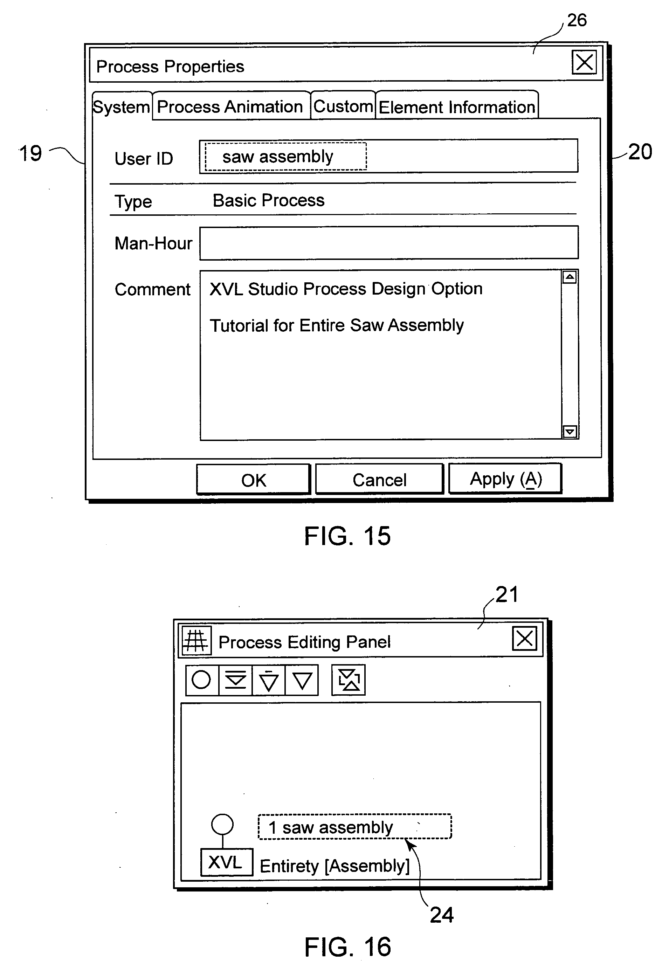

Since the name "Process-1 does not readily convey its contents, this process is now renamed to indicate that it contains the entire saw assembly. When double clicking "1 Process-1" 24, "Process properties" dialog 26 for the process appears as shown in FIG. 15. In a field next to "user ID", "saw assembly" is entered to rename the process. After changing the user ID, an OK button is clicked to implement the process name change in the process editing panel 21 as shown in FIG 16.

Now assembly elements are added to this process. Previously, various parts were assembled to the "left cover". Parts to which other parts are assembled, such as this "left cover", are called "base parts", and they are each positioned at the beginning of their respective base process indicated as ○ and displayed with "∇ + vertical line under".

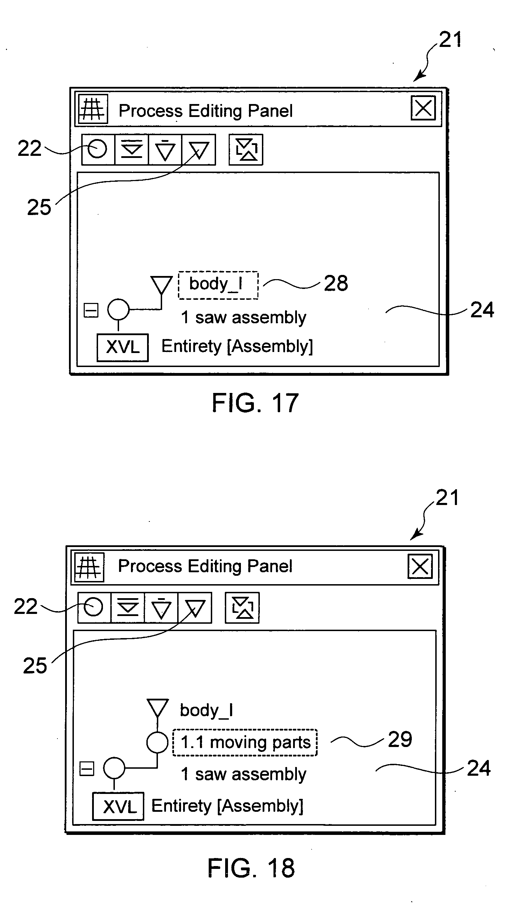

Then "body_1" (the left cover) is added as a base part of the process in one of the following 3 systems:
(1) Select the "body_1" 28 in the "group editing panel" (FIG. 11). Click a "∇ button" 25 and then click a "○ 1 saw assembly" 24 in the process editing panel 21 as shown in FIG. 17.
(2) Select the "body_1" 28 in the "group editing panel" and right-click the "○ 1 saw assembly" 24 in the process editing panel 21 to add a group.
(3) Right-click the "body_1" 28 in the "group editing panel" to perform copying. Then right-click the "○ 1 saw assembly" 24 in the process editing panel 21 to perform pasting.

After the "left cover" is added as the base part of the process, the "∇ body_1" 28 is added at the beginning of the process, as shown in FIG. 17.

Now parts assembled to the base part will be added. First, "moving parts" are added. Since these "moving parts" were considered to be separately assembled together before being added to the "left cover" in the assembly procedure above, a process for these "moving parts" needs to be added.

A basic process is added in one of the following 2 systems:
(1) Click the "○ button" 22 at the top of the "process editing panel" 21 and then click an insert bar displayed at the bottom of the "∇ body_1" 28.
(2) Right-click the "∇ body_1" 28 to add a basic process.

Name it "moving parts." "○ 1.1 moving parts" 29 is added as shown in FIG. 18.

Although this "○ 1.1 moving parts" 29 should be added with its components to create a process to assemble the "moving parts", here, the "○ 1 saw assembly" 24 process for assembling parts to the "left cover" will be completed first. Then, the "○ 1.1 moving parts" 29 will be designed.

Next the "motor", the "knob", the "switch", the "power source", the "right cover" and the "plate", which are to be assembled to the "left cover", are added to the "O 1 saw assembly" 24. Unlike the "moving parts," these parts do not require individual assemblies. For such a part, the "intermediate process" is used with an icon "▼ + upper and under lines".

An intermediate process is added in one of the following 2 systems:
(1) Click the "▼ + upper and under lines" 27 at the top of the "process editing panel" 21 and then click the insert bar displayed at the bottom of the "○ 1.1 moving parts" 29.
(2) Right-click the "○ 1 saw assembly" 24 to add an intermediate process.

Name it "motor assembly."

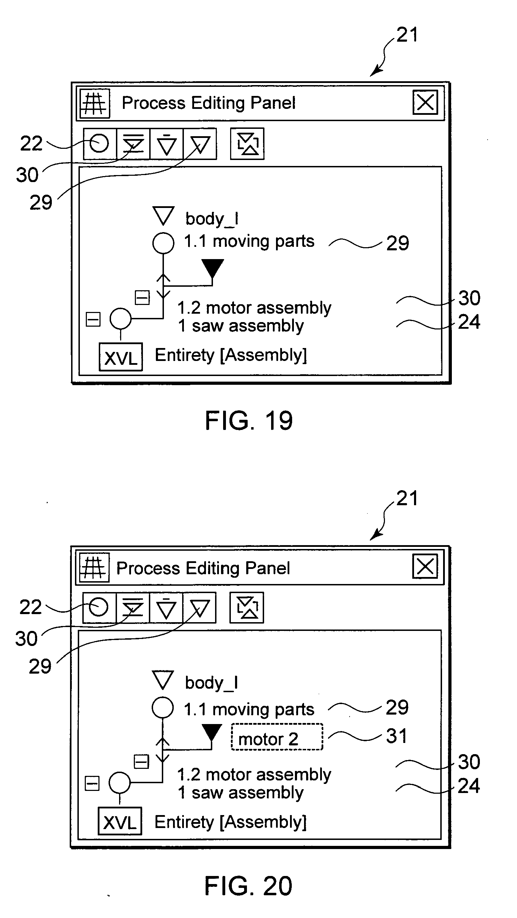

In this manner, an intermediate process "1.2 motor assembly" 30 with an icon "▼ + underline" can be created, as shown in FIG. 19.

Next a part (group) representing the "motor" is added to the "1.2 motor assembly" 30.

"motor 2" is added in one of the following 3 systems:
(1) Select the "motor 2" 31 in the "group editing panel" (FIG. 11). Click "∇ button" 25 in the process editing panel 21 and then click the "1.2 motor assembly" 30.
(2) Select the "motor 2" 31 in the "group editing panel" and right-click the "1.2 motor assembly" 30 in the process editing panel 21 to add a group.
(3) Right-click the "motor 2" 30 in the "group editing panel" to perform copying. Then right-click the "1.2 motor assembly" 30 in the process editing panel 21 to perform pasting.

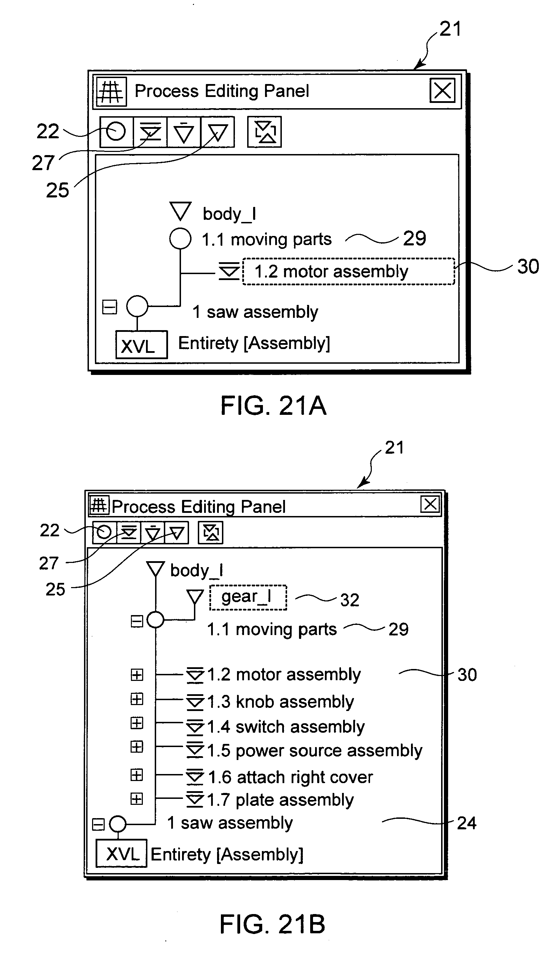

The result is shown in FIG. 20. Parts belonging to the intermediate process have a different color from that of the "∇ body_1" and displayed in the way "▼ motor 2" 31 is shown. In a similar manner, assembly processes for the "knob", the "switch", the "power source", the "right cover" and the "plate" are created to finally generate a process shown in FIG. 21B.

Now the "1.1 moving parts", which has been left with no component, is edited.

In an analogous fashion to the above, the "moving parts" assembly flow will be considered by disassembling these "moving parts" as shown in FIG. 225. It may be determined that the easiest way is to apply a simple flow such as the following:
1. With "lower parts" as a base, sequentially assemble each group of "internal parts."
2. Assemble "upper parts." Although the "upper parts" consists of a plurality of groups, it is considered and assembled as one part.
3. Assemble a "blade." Although the "blade" also consists of 2 groups, it is considered and assembled as one part.

According to the above procedures, processes will be designed as below:

In FIG 21A, the first base "lower parts" is added in the "○ 1.1 moving parts" 29 of the process editing panel 21. This procedure is similar to the creation of the "body_1" 28.

The process becomes as shown in FIG. 21B with "gear_1" 32 added.

Next an intermediate process (V + underline) to assemble the "internal parts" is created. Although the previously created intermediate process had only one part, intermediate processes may each contain a plurality of parts. Here, a process "internal parts assembly" is created as a process to assemble all parts constituting the "internal parts".
1. An intermediate process "1.1.1 Process-1" is created after the "gear_1" 32.
2. Then the above internal process is re-named to "1.1.1 internal parts assembly" in the "Process properties" dialog 26.
3. From the group editing panel, groups constituting the "internal parts" are selected and added to the "1.1.1 internal parts assembly." Positional relationships are considered and groups are added in the following order so that parts do not interfere with each other during the assembly.
   (a) "motor_1"
   (b) "geardriveshaft"
   (c) "retainer"
   (d) "rakefllower"
   (e) "cam"

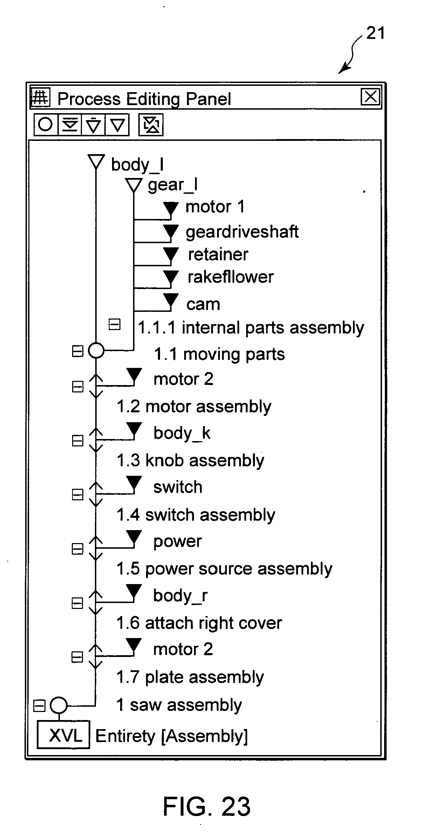

As a result, processes are structured as shown in FIG. 23.

Now processes are created to assemble the "upper parts" and the "blade." For both the "upper parts" and the "blade," a plurality of parts will be treated as one part during the assembly. When a plurality of parts (groups) with no accompanying assembly structure should be treated as one part as above, a "process parts group" with an icon "∇ + ⁻" is used, or an icon "▼ + ⁻" is used when it is included in the intermediate process.

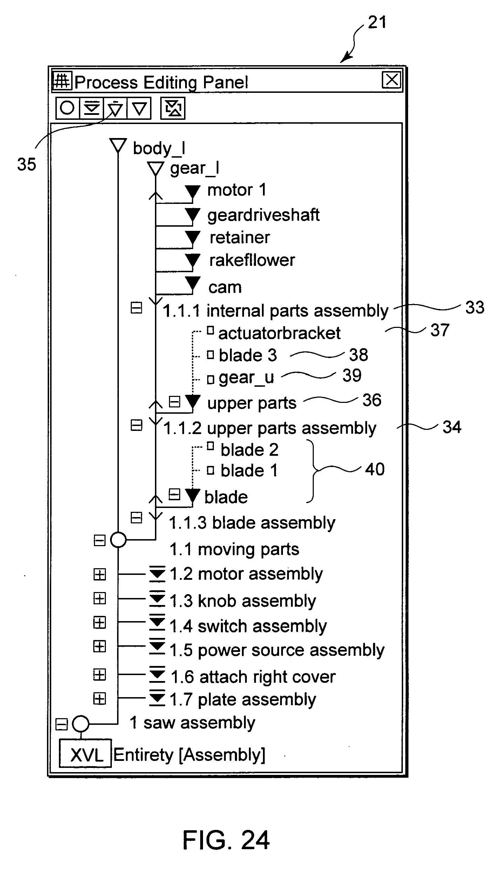

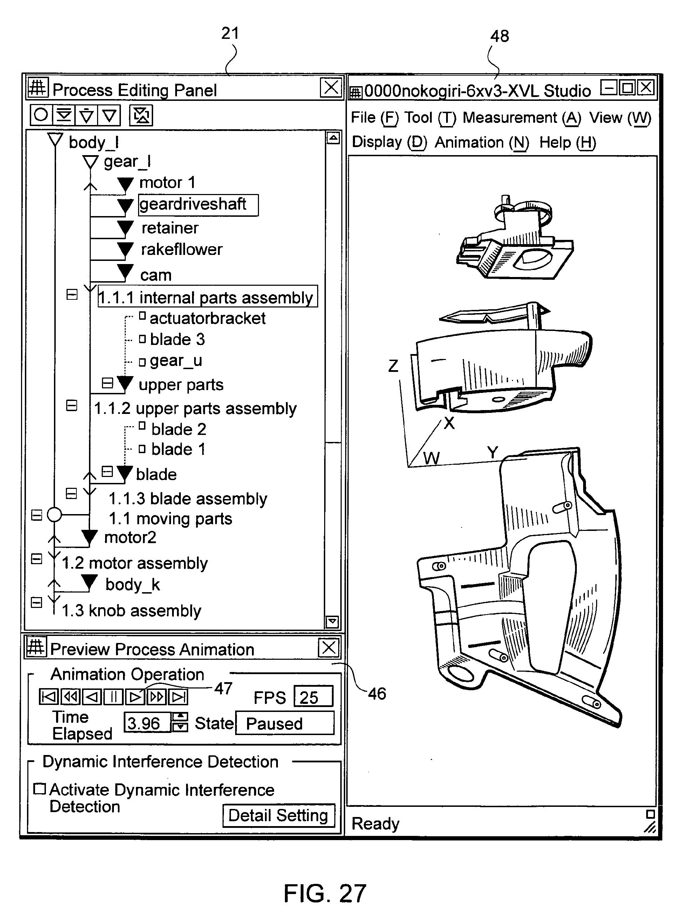

Next an intermediate process for assembling "upper parts" is created using the process parts group.
1. An intermediate process named " '▼ + _' 1.1.2 upper parts assembly" 34 is created after the " '▼ +⁻' 1.1.1 internal parts assembly" 33, as shown in FIG. 27.
2. A process parts group is created in one of the following 2 systems:
   (1) Click the "∇ + ⁻" 35 at the top of the "process editing panel" 21 and then click the "1.1.2 upper parts assembly" 34.
   (2) Right-click the "1.1.2 upper parts assembly" 34 to add a process parts group. A process parts group "Group-1" is created below. Rename it to "upper parts" 36 in the "Process properties" dialog 26. Then this process parts group is displayed as "'▼ + ⁻' upper parts" 36 in the process editing panel 21.
3. In the group editing panel (FIG. 11), select "actuatorbracket" 3 7, "blade3" 38 and "gear_u" 39 to add to the "upper parts" 36 in FIG. 24. Then "groups included in the process parts group" are each added and displayed with an icon "□".

It should be mentioned that the order in the process parts group is irrelevant to the parts assembly order and therefore, the "actuatorbracket", the "blade3" and the "gear_u" may be added in any order.

Similarly, a process parts group is utilized for the "blade" and processes are created as indicated as 40 in FIG. 24. Thus processes in FIG. 24 are structured to conclude the process design.

Next, animation generation by the disassembly animation generation unit 14, and animation replay by the disassembly animation replay control unit 16 will be described below.

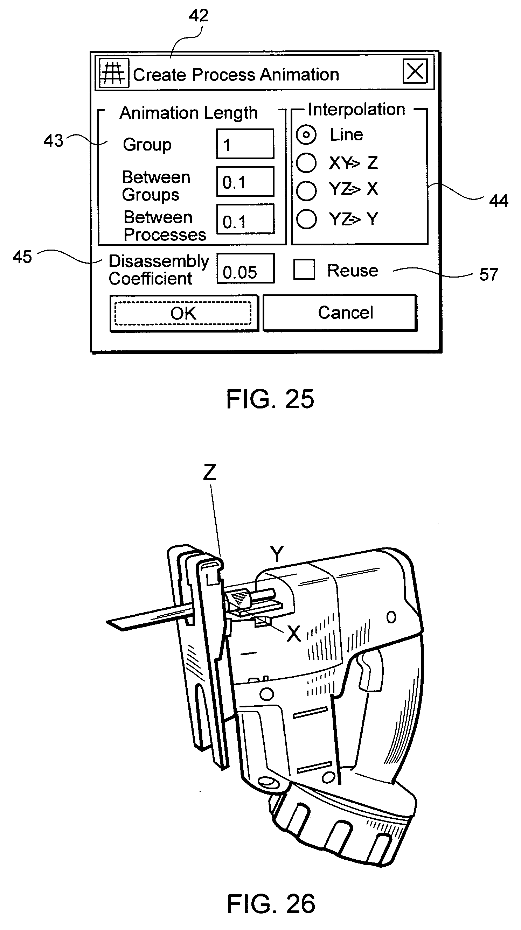

Based on the processes designed above, the disassembly animation generation unit 14 executes an automatic generation of animations. This starts by selecting a "create process animation" command from a menu bar (not shown). By specifying this command, "Create process animation" dialog box 42 is displayed as shown in FIG. 25. After verifying or specifying an animation length 43, an interpolation system 44 for in between the start and end points of animation, and various parameters of a disassembly coefficient 45, and pressing the OK button in this "Create process animation" dialog box 42, a process animation is generated by the system described above.

At this point a camera animation is also automatically generated and its view point is based on the state when the generation occurred. Therefore, if the view point is slightly inclined as shown in FIG. 26 before automatically creating the animation and then performing the process animation, the updated view point is used to generate the disassembly animation.

In order to verify the automatically generated animation, for example, a "Process preview mode" may be selected from the menu (not shown). If [Animation] → [Process preview mode] is selected, the automatically generated animation may be previewed on a graphic screen, as shown in FIG. 27.

If a ">" button 47 is pressed in a "Process animation preview" dialog 46, the animation is replayed in a preview panel 48. Here, the process editing panel 21, the "Process animation preview" dialog 46 and the preview panel 48 work in conjunction with each other, and if a process is selected in the process editing panel 21, an animation start position for that process is selected in response. In addition, when the animation proceeds and switches to another process or group, the new process or group is being selected in the process editing panel 21.

Now editing and re-generation of the process animation will be described below.

When previewing the automatically generated process animation, there may be found unnatural sections with an interference among assembly procedures, and/or sections requiring some changes in animation.

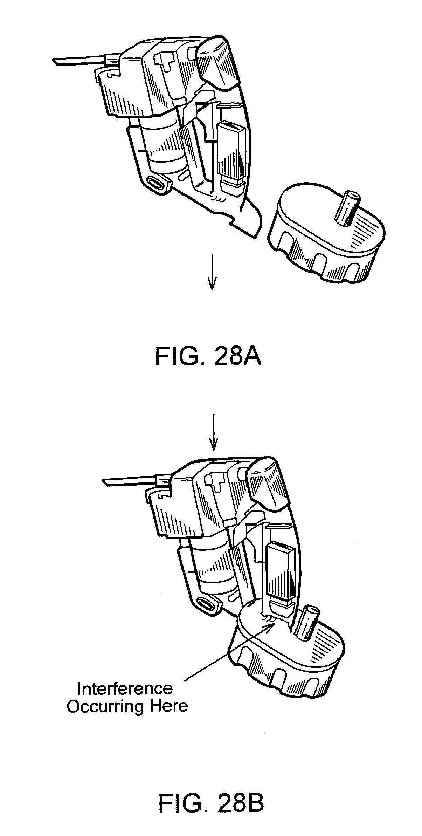

For example, in an animation generated for a "power source assembly", as shown in FIGS. 28A and 28B, an interference is occurring between parts during the assembly. In order to eliminate this interference, the process editing panel 21 is used in conjunction with an animation panel 49 to modify the animation.

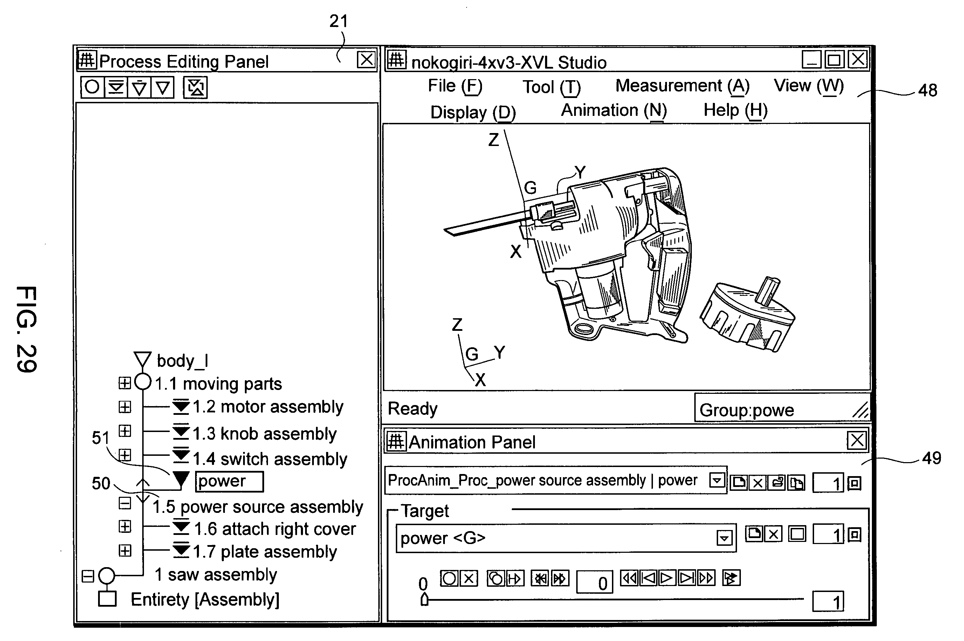

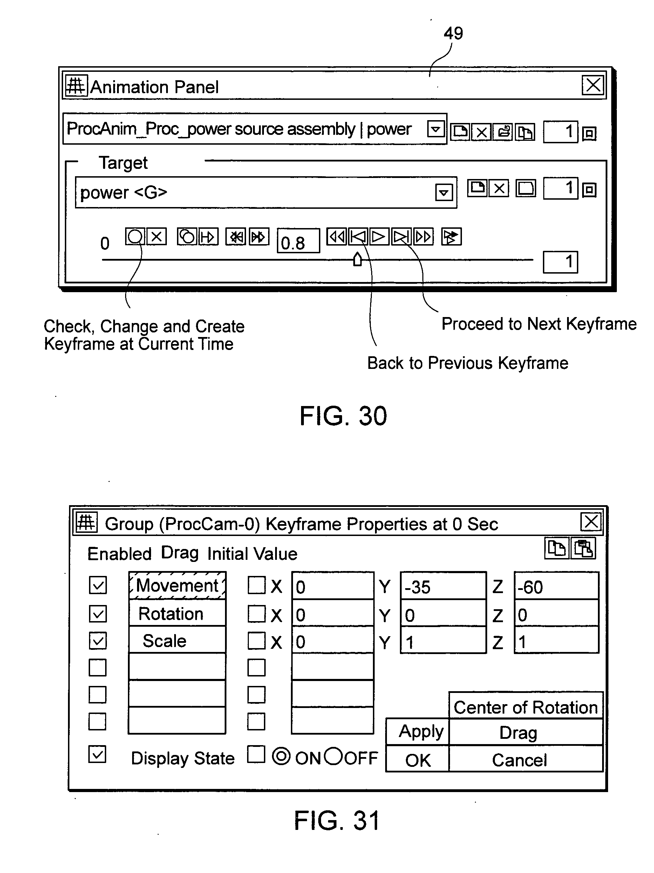

To do this, "power" 51 above "1.5 power source assembly" 50 in the process editing panel 21 should be selected while the process editing panel 21 and the animation panel 49 are both open, as shown in FIG. 29. By the above selection, an animation corresponding to a motion for the power source assembly is selected in the animation panel 49, as shown in FIG. 29. In the animation panel 49, the animation generated for the "power source assembly" can be checked. This animation panel 49 is displayed as shown in FIG. 30, allowing the user to jump through keyframes with ">|" and "|<" and verify keyframe contents with "O". Here, the following is assumed:

An automatically determined position (0, 160.704, 0) is set at 0 second.

An assembly position is set at the 1 second.

Here, the problem may be solved by properly modifying the 0-second position. Hence the "O" is pressed at 0 second to edit the keyframe. When the position is set to (0, -35, -60) in a properties dialog of FIG. 31, the objects appear at reasonable positions. The OK button is pressed to change the keyframe. After this change, a ">" button in the animation panel 49 is pressed to replay and verify the animation.

In a similar manner, motions of other parts will be sequentially edited.

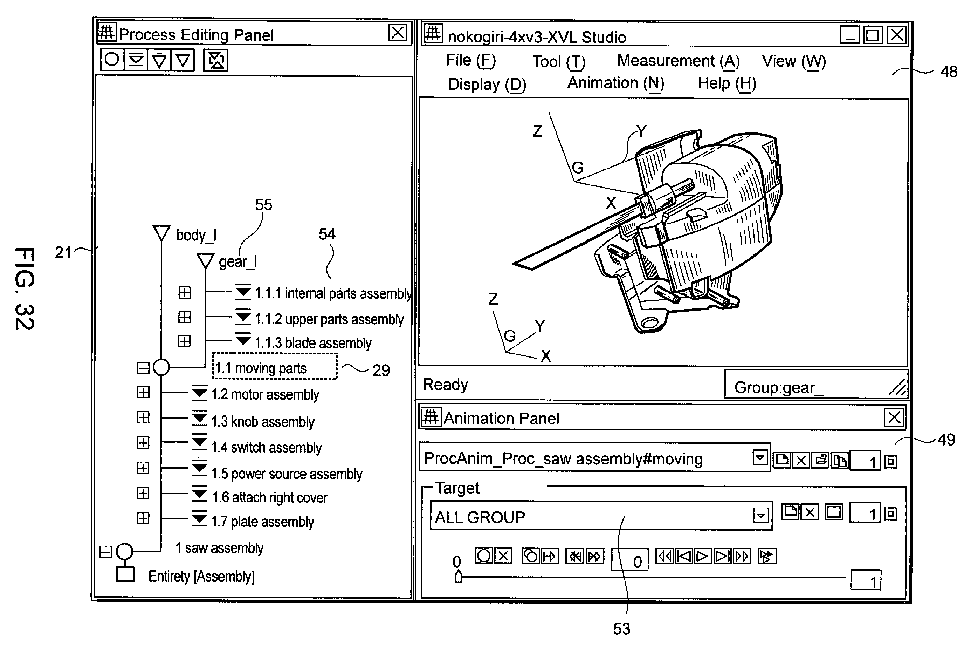

After the "1.1 moving parts" assembly is completed, a motion to fit this "1.1 moving parts" to the "body_1" is made slightly more complicated. In order to edit the assembly motion of the entire "1.1 moving parts" to the "body_1", select the "1.1 moving parts" 29 in the process editing panel 21, as shown in FIG. 32. Then select "ALL GROUP" from Target 53 in the animation panel 49. Now the motions of all the parts included in the "1.1 moving parts" 29 become editable.

For example, if an initial position (at 0 second) of the "1.1 moving parts" 29 is edited with the "ALL GROUP", the disassembly animation modification unit 15 also modifies in response an assembly animation of the "1.1.1 internal parts assembly" 54, which is an assembly process under the "1.1 moving parts" 29, based on the disassembly definition information 11 or the disassembly algorithm 9.

In the following, view point editing will be described.

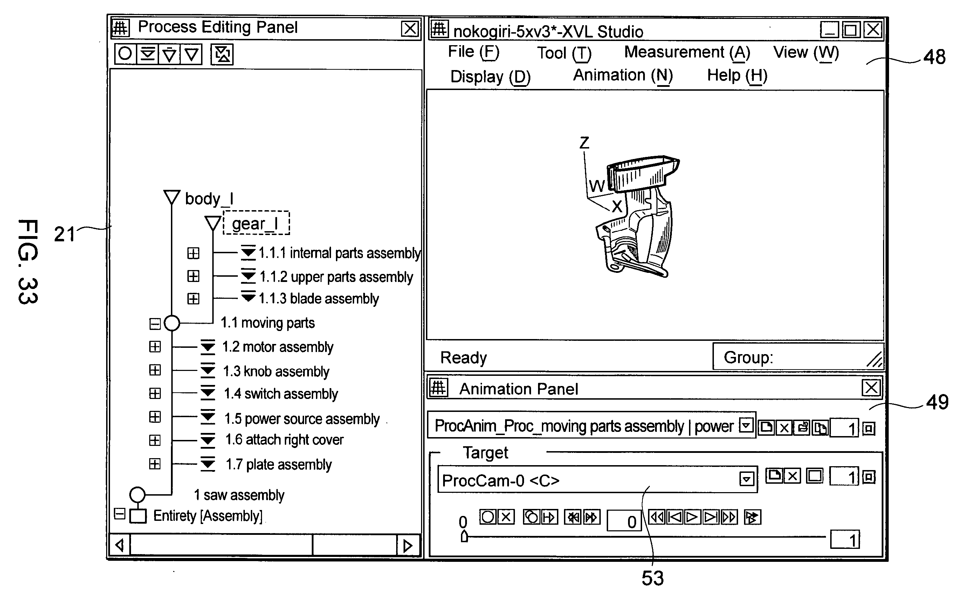

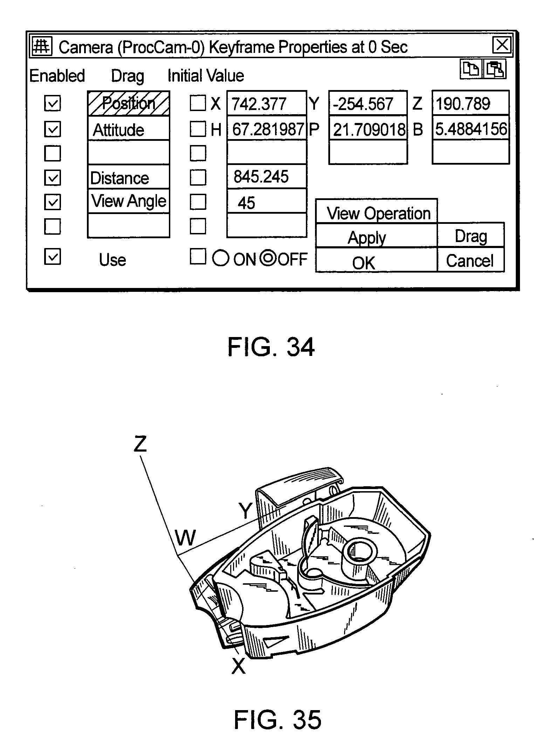

Since the "1.1 moving parts" 29 is assembled at some distance from other parts in the above processes, the camera view point is edited to move to an appropriate position in an assembly animation of the "1.1 moving parts" 29. In this case, "gear_1" 55 of the "1.1 moving parts" 29 is selected in the process editing panel 21. Then, as shown in FIG. 33, from a pull-down menu of the Target 53 in the animation panel 49, "ProcCam-1" is selected to be added to the animation using a button. After pressing the button, the "gear_1" moves to the 0-second position. The button is pressed at 0 second to edit the view point in the animation panel 49 of FIG. 33. When a dialog shown in FIG. 34 appears, the following should be performed.
1. Press a "View operation" button.
2. Adjust a view point position on the graphic screen. For example, view point rotation is performed by "dragging while pressing down the X key", panning is performed by "dragging while pressing down the Z key", zooming is performed by "dragging while pressing down the C key".
3. Select "ON" for a "Use" radio button.
4. When an appropriate view point is set, as shown in FIG. 35, press the OK button to finish editing.

Edit the camera keyframe in a similar manner for the "motor 2" of the "1.2 motor assembly" as well so that the view point comes to an appropriate position in the processes following the "1.1 moving parts" assembly; e.g., "1.2 motor assembly".

After editing of individual animations is completed, these animations need to be regenerated for the overall flow consistency. The "Create process animation" dialog box 42 of FIG. 25 should be displayed to create animations, and during this operation, note that a "Reuse button" 57 is selected. When this button is checked off, animations edited above are used to re-generate the process animation.

After the completion of the process animation re-generation, the preview operation is performed again to check the results. It should be verified that the animations flow naturally this time.

It should be mentioned that the present invention is not limited by the above one embodiment, and that various changes and modifications can be made, without departing from the scope and spirit of the present invention.

Conventionally all animations needed to be manually configured by the user after the designing process. However, according to the structure described above, the task to create animations for indicating the operation procedures may be significantly lightened by utilizing the automatic generation function of the process animation.

## Claims

1. A computer implemented method for automatically generating a process animation, comprising the steps of:
(a) obtaining three-dimensional data of a product consisting of a plurality of parts;
(b) generating disassembly definition information for disassembling said product into parts thereof according to a user entry;
(c) generating a disassembly algorithm for the parts of said product according to said disassembly definition information, and storing said disassembly algorithm in a memory; and
(d) generating a disassembly animation of the parts of said product according to said disassembly algorithm.

2. The method of Claim 1, wherein
said disassembly definition information is the definition information of dependency relationships among parts and group relationships among groups, and comprises a tree structure consisting of nodes and leaves, which are processes and parts, respectively, wherein each of said nodes comprises a basic process and an intermediate process performed in the basic process, and wherein each of said leaves consists of a process parts group for grouping a plurality of parts or parts groups, and said parts or parts groups.

3. The method of Claim 2, wherein
said step (c) generates said disassembly algorithm by adding to said disassembly definition information, a moving coordinate system of said basic process and said intermediate process, and a moving position of the parts or parts groups and the process parts group along said moving coordinate system, that are determined based on said disassembly definition information.

4. The method of Claim 3, wherein
in said step (c), as for said moving coordinate system, the coordinate system of a part or parts group that forms the base of said basic process is selected as the coordinate system of the basic process or the intermediate process.

5. The method of Claim 3, wherein
in said step (c), a shape of each of the parts or parts groups is approximated with a circumscribing polygon thereof, and the moving position is set such that each polygon is at a minimum distance from each other which is greater than a predetermined ratio.

6. The method of Claim 2, wherein
said step (d) generates a movement animation for parts or parts groups in each process for each of the basic process and the intermediate process based on the following parameters:
an animation length,
an interpolation system for between a start and an end point, and
a disassembly coefficient for determining a disassembly moving distance; and generates an entire animation by sequentially connecting said each animation according to said disassembly algorithm.

7. The method of Claim 6, wherein
said step (d) further generates an animation for each of the basic process or the intermediate process by adding camera view point information.

8. The method of Claim 6, wherein
said step (d) further comprises the steps of creating a waiting time animation for between said movement animations or between processes, and inserting said waiting time animation between predetermined movement animations selected from said movement animations.

9. The method of Claim 6, wherein
said step (d) further comprises the steps of taking a snapshot at start and end times of said movement animation to generate an initialization animation, respectively, and inserting said respective initialization animation at start and end points of said each movement animation.

10. The method of Claim 1 further comprises the step of:
(e) modifying said disassembly algorithm and said disassembly animation after said animation or an entire animation is generated.

11. The method of Claim 10, wherein
said step (e) modifies the movement animation of each process by modifying a position, a bearing or a scale of each of the parts or parts groups for each animation created for each of the basic process, the intermediate process and the processes connecting the basic and intermediate processes, wherein the basic, intermediate and connecting processes constitute the disassembly definition information.

12. The method of Claim 11, wherein
said step (e) generates and presents a user interface for modifying the position, bearing or scale for each of said parts or parts groups.

13. The method of Claim 11, wherein
when said step (e) modifies one animation, step (e) also modifies animations of other processes, that are performed within the process corresponding to said one animation, by modifying a position, a bearing or a scale of each of the parts or parts groups in each of those other processes based on said disassembly algorithm.

14. The method of Claim 11, wherein
said step (e) further permits modification of camera view point information for each animation to modify each animation.

15. The method of Claim 11, wherein
said step (e) modifies each movement animation in each process by determining an interference among said parts or parts groups during movements thereof for each animation created for each of the basic processes, intermediate processes, and the processes that connect the basic and intermediate processes, wherein the basic, intermediate and connecting processes constitute said disassembly definition information; and modifying the position, bearing or scale for each of the parts or parts groups in each animation.

16. The method of Claim 15, wherein
said interference among said parts or parts groups during the movements thereof is determined by calculating the interference among respective polygons circumscribed around each of said parts or parts groups.

17. A system for automatically generating a process animation, comprising:
(a) a three-dimensional graphic data obtaining unit for obtaining three-dimensional graphic data of a product consisting of a plurality of parts;
(b) a disassembly definition information generation unit for generating disassembly definition information for disassembling said product into parts thereof according to a user entry;
(c) a disassembly algorithm generation unit for generating a disassembly algorithm for the part of said product according to said disassembly definition information, and
(d) a disassembly animation generation unit for generating a disassembly animation of the parts of said product according to said disassembly algorithm.

18. The system of Claim 17, wherein
said disassembly definition information is the definition information of dependency relationships among parts and group relationships among groups, and comprises a tree structure consisting of nodes and leaves, which are processes and parts, respectively, wherein each of said nodes comprises a basic process and an intermediate process performed in the basic process, and wherein each of said leaves consists of a process parts group for grouping a plurality of parts or parts groups, and said parts or parts groups.

19. The system of Claim 18, wherein
said disassembly algorithm generation unit generates said disassembly algorithm by adding to said disassembly definition information, a moving coordinate system of said basic process and said intermediate process, and a moving position of the parts or parts groups and the process parts group along said moving coordinate system, that are determined based on said disassembly definition information.

20. The system of Claim 19, wherein
said disassembly algorithm generation unit selects the coordinate system of a part or parts group that forms the base of said basic process as the coordinate system of the basic process or the intermediate process.

21. The system of Claim 19, wherein
said disassembly algorithm generation unit approximates a shape of each of the parts or parts groups with a circumscribing polygon thereof, and the moving position is set such that each polygon is at a minimum distance from each other which is greater than a predetermined ratio.

22. The system of Claim 18, wherein
said disassembly animation generation unit generates a movement animation for parts or parts groups in each process for each of the basic process and the intermediate process based on the following parameters:
an animation length,
an interpolation system for between a start and an end point, and
a disassembly coefficient for determining a disassembly moving distance; and generates an entire animation by sequentially connecting said each animation according to said disassembly algorithm.

23. The system of Claim 22, wherein
said disassembly animation generation unit further generates an animation for each of the basic process or the intermediate process by adding camera view point information.

24. The system of Claim 22, wherein
said disassembly animation generation unit further comprises the step of creating a waiting time animation for between said movement animations or between processes, and inserting said waiting time animation between predetermined movement animations selected from said movement animations.

25. The system of Claim 22, wherein
said disassembly animation generation unit further comprises the step of taking a snapshot at start and end times of said movement animation to generate an initialization animation, respectively, and inserting said respective initialization animation at start and end points of said each movement animation.

26. The system of Claim 17, further comprising:
(e) modifying said disassembly algorithm and said disassembly animation after said animation or an entire animation is generated.

27. The system of Claim 26, wherein
said animation modification unit modifies the movement animation of each process by modifying a position, a bearing or a scale of each of the parts or parts groups for each animation created for each of the basic process, intermediate process and processes connecting the basic and intermediate processes, wherein the basic, intermediate and connecting processes constitute the disassembly definition information.

28. The system of Claim 27, wherein
said animation modification unit generates and presents a user interface for modifying the position, bearing or scale for each of said parts or parts groups.

29. The system of Claim 27, wherein
when said animation modification unit modifies one animation, said animation modification unit also modifies animations of other processes, that are performed within the process corresponding to said one animation, by modifying a position, a bearing or a scale of each of the parts or parts groups in each of those other processes based on said disassembly algorithm.

30. The system of Claim 27, wherein
said animation modification unit further permits modification of camera view point information for each animation to modify each animation.

31. The system of Claim 27, wherein
said animation modification unit modifies each movement animation in each process by determining an interference among said parts or parts groups during movements thereof for each animation created for each of the basic processes, intermediate processes, and the processes that connect the basic and intermediate processes, wherein the basic, intermediate and connecting processes constitute said disassembly definition information; and modifying the position, bearing or scale for each of the parts or parts groups in each animation.

32. The system of Claim 31, wherein
said interference among said parts or parts groups during the movements thereof is determined by calculating the interference among respective polygons circumscribed around each of said parts or parts groups.
